# EUROPÄISCHE PATENTSCHRIFT

(11) **EP 0 632 241 B1**
(45) Veröffentlichungstag und Bekanntmachung des Hinweises auf die Patenterteilung: **06.08.1997**
(21) Anmeldenummer: 94108192.9
(22) Anmeldetag: 27.05.1994
(51) Int. Cl.: F26B 11/04, F26B 3/30, F26B 7/00

(54) **Eintopf-Mischer-Granulator-Trockner**
Single pot mixer-granulator-dryer
Malaxeur-granulateur-sécheur à un seul réacteur

(30) Priorität: 03.06.1993 DE 4318471
(43) Veröffentlichungstag der Anmeldung: 04.01.1995
(73) Patentinhaber: Dr. Karl Thomae GmbH, D-88397 Biberach (DE)
(72) Erfinder: Bauer, Kurt, Prof. Dr., D-79112 Freiburg (DE); Carius, Wolfram, Dr., D-88441 Mittelbiberach (DE); Duschler, Gerold, D-88400 Biberach (DE)

(56) Entgegenhaltungen:
- EP-A- 0 151 782
- EP-A- 0 315 041
- WO-A-89/12207
- CH-A- 429 597
- DE-A- 3 128 839
- DE-A- 3 446 424
- DE-A- 4 119 149
- GB-A- 581 040
- US-A- 3 565 168

## Beschreibung

Die Erfindung betrifft einen Eintopf-Mischer-Granulator-Trockner, im folgenden Trockner genannt, bei dem es sich um ein Einstufen- bzw. Eintopf-Produktionsgerät zum sukzessiven Mischen, Feuchtgranulieren und Trocknen von pharmazeutischen Feststoff-Produkten, beispielsweise bei der Herstellung von pulverförmigen Produkten, Pellets oder Granulaten, handelt. In diesem Eintopf-Produktionsgerät sind die einzelnen Schritte der Feuchtgranulation, z. B. das Mischen, das Befeuchten und Kneten sowie das Trocknen, in einer Stufe und ohne Gerätewechsel oder Umladen durchführbar. Ein ähnlicher Trockner ist bereits in der EP-A-0 315 041 beschrieben. Dieser ist bezüglich der vorliegenden Erfindung als nächstkommender Stand der Technik anzusehen.

Der erfindungsgemäße Trockner besitzt eine gegenüber herkömmlichen Produktionsgeräten wesentlich verbesserte Trocknungsleistung. Da die Trocknungsleistung der bisher üblichen, bekannten Geräte dieser Art unbefriedigend ist, was zum Scheitern der breiten Markteinführung beitrug, wurde bei dem erfindungsgemäßen Trockner vor allem die Trocknungsleistung durch die Kombination mehrerer bestimmter Trocknungsmethoden wesentlich verbessert. Die hohe Effektivität der Trocknung wird durch die gleichzeitige Anwendung von vier verschiedenen Trocknungsmechanismen erreicht.

Ein weiterer Gegenstand der Erfindung ist ein Verfahren zum sukzessiven Mischen, Feuchtgranulieren und Trocknen von pharmazeutischen Feststoff-Produkten, beispielsweise bei der Herstellung von pulverförmigen Produkten, Pellets oder Granulaten, bei dem die erforderlichen Mischvorgänge, die Feuchtgranulierung und der sich anschließende Trocknungsvorgang in einem Behälter durchgeführt werden und zur Trocknung eine Kombination aus Kontakt-, Vakuum-, Spülluft- und Infrarottrocknung mit Hilfe eines außerhalb des Trockners angeordneten elektrisch beheizbaren Infrarot-Flächenstrahlers oder eines elektrisch beheizbaren Quarzrohrstrahlers zum Einsatz kommt.

Herkömmliche Produktionsgeräte zur Herstellung pharmazeutischer Granulate, die mit Kombinationen von Kontakt- und Vakuumtrocknung mit Mikrowellen- oder Spüllufttrocknung arbeiten oder bei denen eine Infrarottrocknung eingesetzt wird, besitzen mehrere entscheidende Nachteile.

Bei der Verwendung von Mikrowellenenergie darf ein bestimmter Mindestdruck (80-100 mbar) nicht unterschritten werden, da sonst das Risiko von Spannungsdurchschlägen und daraus resultierenden Verbrennungen des Trocknungsgutes enorm ansteigt (A.C. Metaxas, R.J. Meredith, Industrial Microwave Heating, London 1983, S. 259ff). Bei der Infrarottrocknung können dagegen wesentlich niedrigere Druckbereiche genutzt werden.

Das aus der Einstrahlung von Mikrowellen im Trocknungsbehälter resultierende elektrische Feld ist weder kalkulierbar noch steuerbar. Unter ungünstigen Bedingungen kommt es bei Überlagerung von Reflektionen an unbewegten bzw. unbewegbaren Stellen des Gutsbettes, beispielsweise bei Anbackungen an der Behälterinnenwand, zu kritischen Feldlinienverdichtungen und in deren Folge zu lokaler Überhitzung ("hot spots") und zu Verbrennungen des Gutes. Dagegen besteht diese Gefahr bei Applikation von Infrarotstrahlung generell nicht.

In der Offenlegungsschrift DE 34 46 424-A1 wird ein Wärmestrahlungstrockner zum Nachtrocknen pharmazeutischer Produkte beschrieben. Das Gerät besteht aus einem drehbaren Aufnahmebehälter für das Trocknungsgut und besitzt im Innenraum des Behälters angeordnete als Infrarot-Wärmelampen ausgebildete Heizstrahler. Zusätzlich ist der Behälter über einen Vakuum-Absauganschluß evakuierbar. Durch die hier erfolgende direkte Bestrahlung des Trocknungsgutes ist neben einer Beeinträchtigung der Gutsqualität durch an der Oberfläche der Lampenstrahler verbrannte Staubpartikel auch mit einer ungünstigen Beeinflussung der Emissionscharakteristik durch anhaftende Partikel sowie mit einer Verringerung der Lebensdauer des Strahlers zu rechnen.

Da die Strahlung emittierende Oberfläche von Infrarot-Wärmelampen sehr klein ist, lassen sich keine großen Energiemengen übertragen. Desweiteren läßt sich das Emissionsspektrum dieser Lampen nicht ausreichend auf die Absorptionskurve des herauszutrocknenden Lösungsmittels, im allgemeinen Wasser, abstimmen.

Der in der EP-A-0 315 041 beschriebene Eintopf-Mischer-Granulator-Trockner weist eine Kombination aus Kontakt-, Vakuum- und Spüllufttrocknung auf. Das Gerät kann über eine horizontale Schwenkachse in Rotation versetzt werden und besitzt eine Doppelwandstruktur, sodaß ein Wärmeeintrag durch Beschickung des Hohlraums zwischen den Behälterwänden mit Heißwasser oder heißer Luft möglich ist. Durch die horizontale Schwenkachse sind mehrere ins Innere des Behälters mündende Versorgungsleitungen geführt, über die in den Trockner während des Betriebs flüssige oder feste Materialien eingebracht werden können und über die Unterdruck angelegt sowie Spülluft ins Behälterinnere geführt werden kann. Als besonderer Vorteil ist angegeben, daß der nachträgliche Eintrag weiterer Bestandteile zum Trocknungsgut ohne Unterbrechung des Trocknungsvorgang durch die Versorgungsleitungen wesentlich vereinfacht ist. Als weiterer Vorteil ist angeführt, daß das Trocknungsgut während des Betriebs nicht an die Innenwandung des Trockners anhaftet. Der in der EP-A-0 315 041 beschriebene Trockner besitzt keine Einrichtung zum Eintrag von Strahlungsenergie.

Die Aufgabe der vorliegenden Erfindung besteht in der Bereitstellung eines Einstufen- bzw. Eintopf-Produktionsgerätes zum sukzessiven Mischen, Feuchtgranulieren und Trocknen von pharmazeutischen Feststoff-Produkten, insbesondere bei der Herstellung von pharmazeutischen Granulaten, mit dem die vorstehend für die Anwendung von Mikrowellenenergie oder Infrarotstrahlung bei herkömmlichen Geräten beschriebenen Nachteile überwunden werden und mit dessen Hilfe bei möglichst einfachem apparativen Aufwand eine überlegen schnelle, effektive und schonende sowie kostengünstige Trocknung pharmazeutischer Feststoffe ermöglicht wird.

Die Lösung dieser Aufgabe erfolgt durch eine Kombination von vier verschiedenen Trocknungskomponenten im erfindungsgemäßen Trockner, bestehend aus Kontakt-, Vakuum-, Spülluft- und Infrarottrocknung.

Der erfindungsgemäße Trockner besteht im wesentlichen aus einem verschließbaren, um eine Schwenkachse (17) zur Bildung eines sich in sich bewegenden Trocknungsgutsbettes jeweils bis zu 90° nach links und rechts schwenkbaren Aufnahmebehälter (12) und Behälterdeckel (11) mit für die Kontakttrocknung beheizbaren Kesselwandungen, einem im Innenraum des Behälters (12) geeignet angeordneten drehbaren Mischarm zur gegebenenfalls zusätzlichen Förderung der Durchmischung des Trocknungsgutes, bestehend aus einer Mischarmwelle (15) mit daran angebrachten Mischarmflügeln (13), einem an der Unterseite des Aufnahmebehälters (12) in dessen Innenraum führenden Spüllufteinlaß (14) für die Spüllufttrocknung und einem gegenüberliegend an der Oberseite des Behälterdeckels (11) angeordneten, gleichzeitig als Spülluftauslaß dienenden Vakuumanschluß (9), über den der Trockner evakuierbar ist, für die Vakuumtrocknung. Zusätzlich weist der Trockner als entscheidendes Merkmal eine Infrarottrocknungskomponente auf, bestehend aus einer luftdicht in die Wand des Behälterdeckels (11) integrierten, für Infrarotstrahlung ausreichend durchlässigen Scheibe (2) und einem außerhalb des Trockners montierten Infrarotstrahler (1), ausgewählt aus einem elektrisch beheizbaren keramischen Infrarot-Flächenstrahler und einem elektrisch beheizbaren Quarzrohrstrahler (1), der seine Energie durch die Scheibe (2) auf das im Innenraum des Trockners befindliche Trocknungsgut abstrahlt.

Als Infrarotstrahler (1) können beispielsweise die handelsüblichen Strahler des Typs Elstein T-FSR 1000^{(R)}, T-HTS 800^{(R)} oder ein kurzwelliger oder mittelwelliger Heraeus Standardstrahler verwendet werden.

Die beiden ersten im erfindungsgemäßen Trockner realisierten Trocknungskomponenten bestehen in der Kontakttrocknung durch Wärmeeintrag über die beheizbar ausgestalteten Kesselwandungen des Trockners sowie in der Vakuumtrocknung, das heißt in der Erniedrigung des Siedepunktes des herauszutrocknenden Lösungsmittels durch Anlegen von Vakuum, und sind allgemein auch bei herkömmlichen Trocknern weit verbreitet bzw. können bei Eintopfgeräten als Standard angesehen werden.

Durch Wärmekontakt mit den durch ein geeignetes Wärmemedium wie Heißwasser oder Dampf beheizbaren Kesselwandungen des Trockners, beispielsweise über in die Kesselwandungen integrierte Wärmemittelkreisläufe, wird das Gut infolge des Wärmeübergangs erwärmt. Es kann beispielsweise ein Wärmemedium mit einer Temperatur zwischen 50 und 80°C verwendet werden. Bevorzugt wird jedoch ein Wärmemedium mit einer Temperatur von 60°C verwendet. Beim Anlegen von Vakuum über einen am Trockner angebrachten Vakuumanschluß (9) wird durch die Siedepunktserniedrigung weniger Energie zum Verdampfen des Lösungsmittels benötigt und gleichzeitig eine schonende Trocknung ermöglicht. Im Vakuum wird allerdings der Wärmeübergang von der Wand auf das Gut erheblich schlechter als bei Normaldruck und somit ist auch die Ausnutzung der zugeführten Wärme geringer. Beispielsweise wird ein Vakuum mit einem Druck zwischen 10 und 200 mbar angelegt. Bevorzugt ist jedoch ein Druck zwischen 130 und 175 mbar. Die angegebenen Druckwerte beziehen sich auf den bei gleichzeitiger Aktivierung aller vier Trocknungskomponenten des erfindungsgemäßen Trockners realisierten konstanten Enddruck.

Die dritte Trocknungskomponente, die Spüllufttrocknung, beruht auf einem konvektiven Mechanismus. Mit Hilfe des über den Vakuumanschluß (9) am Trockner angelegten Unterdrucks wird über den auf der Unterseite des Behälters angeordneten Spüllufteinlaß (14) ein geringer, aber definierter Strom trockener, gereinigter und erhitzter Luft von unten in das Produktbett geführt und durch das gesamte Trocknungsgut hindurch gesaugt. Der Spüllufteinlaß (14) besteht beispielsweise in einer semipermeablen porösen Membran oder liegt in Form von geeigneten porösen Sintermetalleinsätzen vor, die auswechselbar und leicht zu reinigen sind. Die Spülluftversorgung erfolgt beispielsweise durch Anlegen von Preßluft über eine Druckluftzuleitung (20) mit einem Druck von 4 bis 8 bar und einer Temperatur zwischen 100 und 250°C an den Spüllufteinlaß (14), wobei die Spülluft unter Entspannung des Druckes durch den Spüllufteinlaß (14) beispielsweise mit einer Durchflußrate zwischen 10000 und 50000 l/h in den Innenraum des Trockners gelangt. Vorzugsweise wird Preßluft mit einem Druck von 6 bar und einer Temperatur von 230°C und bei einem Innenraum-Volumen des geschlossenen Behälters (12) von 50 1 eine Durchflußrate zwischen 16000 und 18000 l/h verwendet. Bevorzugt wird die Preßluft über eine Spülluftzuführung (16) durch eine im Aufnahmebehälter (12) geeignet angeordnete hohlgebohrte Mischarmwelle (15) zu einem in den Mischarmflügel (13) integrierten Spüllufteinlaß (14) geleitet. Vor der Spülluftzuführung (16) ist ein geeigneter Durchflußmesser (23) mit Regelventil zur Kontrolle und Regelung der Durchflußrate der Spülluft sowie eine geeignete Heizvorrichtung (24) mit nachgeschaltetem Lufttemperaturfühler (26) zur Aufheizung der Spülluft angeordnet. Die durch das Produktbett geleitete Spülluft (Strip-Gas) sättigt sich teilweise mit dem verdampfenden Lösungsmittel auf und dient als Vehikel zum besseren und schnelleren Abtransport der Dämpfe. Mit Hilfe der trockenen Spülluft stellt sich ein starkes Dampfdruckgefälle gegenüber dem Trocknungsgut ein, was zu einer Steigerung des Trocknungseffektes führt. In Abhängigkeit vom Saugvermögen der eingesetzten Vakuumpumpen kann das Spülluft-Volumen bis zu einem Optimum zugunsten einer erhöhten Trocknungsgeschwindigkeit gesteigert werden.

Von entscheidender Bedeutung für die vorliegende Erfindung ist die Kombination der drei vorstehend erwähnten und bereits ebenfalls in Kombination vorbekannten Trocknungskomponenten mit einer Infrarot-Trocknungskomponente, bei der es sich um einen elektrisch beheizbaren Infrarot-Flächenstrahler oder Quarzrohrstrahler (1) handelt, der auf der Außenseite des Trockners montiert ist und seine Energie durch eine geeignete Scheibe (2) auf das im Innenraum befindliche Trocknungsgut abstrahlt. Der Strahler (1) ist mit einer geeigneten Stromversorgung und Steuerungseinrichtung versehen.

Erfindungsgemäß läßt sich durch das Zusammenwirken dieser vier Trocknungskomponenten die Trocknungsgeschwindigkeit pharmazeutischer Feststoff-Produkte unter schonenden Bedingungen gegenüber herkömmlichen Trocknern erheblich steigern und es wird vor allem ein signifikant niedrigerer Restfeuchte- bzw. Restlösungsmittelgehalt im Trocknungsgut ermöglicht. Die erfindungsgemäße Verwendung elektrisch beheizbarer Infrarot-Flächenstrahler oder elektrisch beheizbarer Quarzrohrstrahler ist gegenüber des Einsatzes der aufwendigen Mikrowellentechnologie äußerst kostengünstig.

Da es während des Trocknungsprozesses zwangsläufig zu erheblicher Staubbildung kommt, scheidet eine Montage des Infrarotstrahlers im Inneren des Trockners aus pharmazeutischen Gründen aus. Staubpartikel verbrennen an der Oberfläche des nahezu 700°C heißen keramischen Flächenstrahlers oder des nahezu 300°C heißen Quarzrohrstrahlers und gelangen als Verunreinigung ins Produkt.

Dadurch daß die Strahlung in Behältermitte auf eine sich ständig durchmischende Gutsoberfläche trifft, ist gewährleistet, daß die absorbierte Strahlung einem ausreichenden Wärmeaustausch zwischen den Gutspartikeln unterworfen ist und keine unbewegten Gutszonen bestrahlt werden. Anbackungen spielen keine Rolle, da sie nicht in der Bestrahlungszone liegen. Die permanente und dennoch schonende Durchmischung des Gutes wird einerseits durch ein Schwenken des Trocknungsbehälters um jeweils bis zu 90° nach links und rechts um eine Schwenkachse (17) ermöglicht, sowie andererseits durch den in Intervallen langsam rotierenden Mischarm. Beispielsweise kann der Mischarm in Intervallen von 60 sec. für jeweils 6 sec. mit einer Geschwindigkeit von 4 bis 10 U/min. in Rotation versetzt werden.

Aus der Vielzahl von Infrarotstrahlern sind zur Lösung der Aufgabe der vorliegenden Erfindung überraschenderweise vor allem die oben genannten elektrisch beheizten keramischen Flächenstrahler und die elektrisch beheizten Quarzrohrstrahler geeignet. Der zu den Dunkelstrahlern gehörende elektrisch beheizte keramische Flächenstrahler emittiert die Hauptmenge seiner Energie in demselben Wellenlängenbereich, in dem Wasser sein Absorptionsmaximum besitzt.

Über eine Thermoelement-gesteuerte Temperaturregelung ist das Strahlverhalten beispielsweise eines keramischen Infrarot-Flächenstrahlers exakt auf ±1°C steuerbar. Da das Emissionsverhalten des Strahlers mit dessen Oberflächentemperatur korreliert ist, läßt sich gezielt ein bestimmtes Emissionsspektrum mit entsprechender Scheitelwellenlänge erzeugen. Zweckmäßigerweise wird die Scheitelwellenlänge des Strahlers auf ein geeignetes Absorptionsmaximum des herauszutrocknenden Lösungsmittels abgestimmt. In Experimenten hat sich zum Heraustrocknen von Wasser als Lösungsmittel eine Scheitelwellenlänge des Strahlers im Bereich von 2,5 bis 6 µm, als geeignet erwiesen. Besonders geeignet ist hierbei eine Scheitelwellenlänge von 3 µm, die einer Oberflächentemperatur von 690°C entspricht.

Der Strahler ist mechanisch und thermisch stark belastbar und hat eine sehr hohe Lebensdauer. Da die Strahlung emittierende Oberfläche groß ist, lassen sich relativ große Energiemengen übertragen. Andere Infrarotstrahler, besonders Hellstrahler in Glühlampenbauart, besitzen alle diese geforderten Eigenschaften nicht und eignen sich nicht für den beschriebenen Zweck.

Zur Vermeidung von Streuverlusten kann der Strahler (1) mit Reflektoren aus blankgewalztem Aluminium oder Silber bzw. Gold als Aufdampfung oder entsprechender dünner Schicht auf einem Trägermaterial versehen werden. Zwischen Strahler (1) und Scheibe (2) wird bei Verwendung keramischer Flächenstrahler zweckmäßigerweise eine Reflektorklappe (3) mit Schwenkmechanismus so angeordnet, daß durch Schließen der Reflektorklappe (3) die Arbeitstemperatur schneller erreicht bzw. bei kurzen Unterbrechungen mit nur geringer Energiezufuhr gehalten werden kann. Außerdem wird auf diese Weise vermieden, daß die Strahlung der beim Aufheizen und Abkühlen durchfahrenen Wellenlängenbereiche von der Scheibe (2) absorbiert und diese unnötig erhitzt wird.

Die Scheibe (2) zwischen Strahler (1) und dem Trocknungsgut selbst ist vakuumfest, thermisch und mechanisch stark belastbar und verfügt über ein geeignetes Transmissionsverhalten für die Infrarotstrahlung im Betriebsbereich der Strahleremission. Bevorzugt werden Scheiben mit einer Transmission von mehr als 60% bei der unter den Betriebsbedingungen eingestrahlten Scheitelwellenlänge der Infrarotstrahlung verwendet. Besonders bevorzugte Scheiben weisen eine Transmission von mehr als 80% auf. Scheiben mit Transmissionswerten unter 60% sind ungeeignet. Uneingeschränkt geeignete Scheiben bestehen vorzugsweise aus Quarz mit niedrigem OH-Gehalt.

Zur Abführung der von der Scheibe (2) absorbierten Strahlungswärme wird die Oberfläche der Scheibe (2) zweckmäßigerweise mit einem Luftstrom, z. B. von einem Kühlgebläse (4) oder einem Saugventilator erzeugt, gekühlt. Das Kühlgebläse (4) wird bei Verwendung keramischer Flächenstrahler zweckmäßigerweise so angeordnet, daß der Luftstrahl nur die Scheibe (2) überstreicht und nicht die Strahleroberfläche tangiert.

Es empfiehlt sich, die dem Trocknungsgut zugewandte Oberfläche der Scheibe (2) mit einer geeigneten Intervallluftstrahlspülung (5) von Verunreinigungen freizuhalten, damit die Strahlung ungehindert zum Gut gelangen kann und die Funktion der Scheibe (2) aufrechterhalten bleibt, ohne daß jedoch das Vakuum beeinträchtigt wird.

Nur eine Kombination aller vier vorstehend beschriebenen Trocknungsmechanismen und -einrichtungen garantiert den gewünschten Verlauf und die Funktion der Trocknung mit der gewünschten Qualität des Endproduktes.

Der zweite Gegenstand der Erfindung besteht in einem Verfahren zum sukzessiven Mischen, Feuchtgranulieren und Trocknen von pharmazeutischen Feststoff-Produkten, beispielsweise bei der Herstellung von pulverförmigen Produkten, Pellets oder Granulaten, bei dem die erforderlichen Mischvorgänge, die Feuchtgranulierung und der sich anschließende Trocknungsvorgang in dem vorstehend beschriebenen Trockner durchgeführt werden und zur Trocknung gleichzeitig eine Kombination aus Kontakt-, Vakuum- und Spüllufttrocknung zum Einsatz kommt, dadurch gekennzeichnet, daß zusätzlich eine Infrarottrocknung durchgeführt wird, indem mit Hilfe des außerhalb des Trockners montierten Infrarotstrahlers (1) durch die in die Wand des Trockners integrierte Scheibe (2) Infrarotstrahlung mit einer auf das Absorptionsverhalten des herauszutrocknenden Lösungsmittels abgestimmten Scheitelwellenlänge auf das im Innenraum des Behälters (12) befindliche Trocknungsgut abgestrahlt wird und die Scheibe (2) eine Transmission von mehr als 60 % bei der eingestrahlten Scheitelwellenlänge aufweist. Für das beschriebene Verfahren wird die Bezeichnung VAKIR-Verfahren (VAkuum, Kontakt, InfraRot) mit integrierter Spüllufttrocknung vorgeschlagen.

Vorzugsweise besitzt die Scheibe (2) eine Transmission von mehr als 80% bei der eingestrahlten Scheitelwellenlänge. Zum Heraustrocknen von Wasser wird zweckmäßigerweise Infrarotstrahlung mit einer Scheitelwellenlänge im Bereich von 1,2 bis 6 µm verwendet, insbesondere jedoch mit einer Scheitelwellenlänge von 1,2 µm.

Das erfindungsgemäße Verfahren zeichnet sich desweiteren dadurch aus, daß
a) die Kontakttrocknung durch Wärmeeintrag über in die Kesselwandungen des Behälters (12) und/oder des Behälterdeckels (11) integrierte Wärmemittelkreisläufe erfolgt, wobei das Wärmemittel eine Temperatur zwischen 50 und 80°C besitzt,
b) die Vakuumtrocknung durch Erniedrigung des Siedepunktes des herauszutrocknenden Lösungsmittels mit Hilfe von Unterdruck erfolgt, wobei über einen am Behälter (12) oder Behälterdeckel (11) angebrachten Vakuumanschluß (9) im Innenraum des geschlossenen Behälters (12) ein konstanter Druck zwischen 10 und 200 mbar hergestellt wird, und
c) die Spüllufttrocknung durch Hindurchleiten eines definierten Stromes trockener, gereinigter und erhitzter Luft durch das gesamte Trocknungsgut erfolgt, wobei die Spülluft mit Hilfe des im Innenraum des geschlossenen Behälters (12) herrschenden Unterdruckes über einen an der Unterseite des Behälters (12) angeordneten Spüllufteinlaß (14) mit geeigneter Spülluftversorgung bei einer Durchflußrate von 10000 bis 50000 l/h in das Trocknungsgutbett eingeleitet wird und durch den Vakuumanschluß (9) aus dem Behälter (12) austritt.

Vorzugsweise wird für die Kontakttrocknung als Wärmemittel Heißwasser oder Wasserdampf mit einer Temperatur von 60°C verwendet. Für die Vakuumtrocknung wird vorzugsweise über einen am Behälterdeckel (11) angebrachten Vakuumanschluß (9) im Innenraum des geschlossenen Behälters (12) ein konstanter Druck zwischen 130 und 175 mbar erzeugt. Bei der Spüllufttrocknung wird bei einem Innenraum-Volumen des Trockners von 50 l bevorzugt eine Durchflußrate der Spülluft zwischen 16000 und 18000 l/h gewählt, wobei zur Spülluftversorgung vorzugsweise trockene, gereinigte und erhitzte Preßluft über eine Spülluftzuführung (16) durch eine im Behälter (12) geeignet angeordnete hohlgebohrte Mischarmwelle (15) und den daran angesetzten, mit einem Innenhohlraum versehenen Mischarmflügel (13) zu einem in den Mischarmflügel (13) integrierten Spüllufteinlaß (14) geleitet wird und die Preßluft einen Druck von 4 bis 8 bar und eine Temperatur zwischen 100 und 250°C besitzt. Besonders bevorzugt besitzt die Preßluft einen Druck von 6 bar und eine Temperatur von 230°C. Die Durchflußrate der Spülluft kann mit Hilfe eines vor der Spülluftzuführung (16) angeordneten Durchflußmessers (23) mit Regelventil kontrolliert und geregelt werden.

Der Behälter (12) wird während des Trocknungsvorganges zur Bildung eines in sich bewegenden Trocknungsgutbettes zweckmäßigerweise um eine Schwenkachse (17) langsam abwechselnd nach links und rechts geschwenkt, wobei die Durchmischung des Trocknungsgutes auch durch einen im Innenraum des Behälters (12) in Intervallen langsam rotierenden Mischarm zusätzlich gefördert werden kann. Dabei wird der Behälter (12) um die Schwenkachse (17) vorzugsweise jeweils bis zu 90° nach links und rechts geschwenkt, wobei der Mischarm zusätzlich beispielsweise in Intervallen von 60 sec. für jeweils 6 sec. mit einer Geschwindigkeit von 4 bis 10 U/min. in Rotation versetzt werden kann.

Die folgenden Ausführungsbeispiele dienen, unter Bezugnahme auf die Abbildungen in Figur I bis V, der näheren Erläuterung der Erfindung, sollen jedoch keine Einschränkung der Erfindung auf konkrete Ausführungsformen darstellen.

### Beispiel 1

In Figur I ist eine schematisierte Seiten-Querschnittsdarstellung eines erfindungsgemäßen Trockners dargestellt:

Der Trockner besteht aus einem beheizbaren sowie kühlbaren Behälter (12) und einem luftdicht abschließenden ebenfalls beheizbaren und kühlbaren Behälterdeckel (11), wobei die Beheizung bzw. Kühlung durch in die Wandungen integrierte Heiß- bzw. Kaltwasserkreisläufe ermöglicht wird, und ist einseitig über eine Schwenkachse (17) um jeweils bis zu 90° nach links und rechts schwenkbar gelagert, um eine freie Durchmischung des Gutsbettes zu ermöglichen. An den Behälterdeckel (11) ist ein beheizbarer Filterdom (10) angesetzt, der einen Vakuumanschluß (9) mit Ablufttemperaturfühler (19) besitzt. Der Filterdom (10) enthält ein rückspülbares Produktstaubfilter. Die Spülluftzufuhr erfolgt von der Unterseite des Behälters (12) durch die hohlgebohrte drehbare Mischarmwelle (15), wobei (16) die Spülluftzuführung in die Mischarmwelle (15) darstellt. Der Innenhohlraum der Mischarmwelle (15) ist mit einem in den Innenraum des Behälters (12) führenden Spüllufteinlaß (14) verbunden. Der Spüllufteinlaß (14) kann aus einer porösen semipermeablen Membran oder aus porösen Sintermetall-Einsätzen bestehen und ist in den an die Mischarmwelle (15) angesetzten Mischarmflügel (13) integriert.

In den Behälterdeckel (11) ist über einen Sockel mit Einbaurahmen (6) eine infrarotdurchlässige Scheibe (2) luftdicht montiert. Innerhalb des Sockels ist eine auf die Scheibe (2) gerichtete, mit einer geeigneten Luftzuleitung verbundene Düse für Intervallluftstrahlspülung (5) montiert, mit deren Hilfe die Scheibe (2) in vorbestimmbaren Intervallen von Verunreinigungen freigeblasen werden kann.

Oberhalb der Scheibe (2) ist über die Strahlerhalterung (8) ein elektrisch beheizbarer keramischer Infrarotflächenstrahler (1) vom Typ Elstein T-FSR 1000^{(R)} angebracht. Der Strahler (1) besitzt ein Reflektorgehäuse und ist mit einer Reflektorklappe (3) mit Schwenkmechanismus versehen. (7) stellt den Anschluß für die Stromversorgung und Steuerung des Strahlers (1) dar. Über ein Kühlgebläse (4) kann die dem Strahler (1) zugewandte Oberfläche der Scheibe (2) gekühlt werden.

Im Innenraum des Behälters (12) ist ein Temperaturfühler (18) zur Bestimmung der Temperatur des Trocknungsgutes angebracht. Das Trocknungsgut kann pulverförmig, körnig oder geformt sein und beispielsweise in Form von Granulat, Pulver oder Pellets vorliegen.

Figur II zeigt die Infrarot-Trocknungsvorrichtung in Form einer Prinzipskizze:

Der an einer Strahlerhalterung (8) fixierte keramische Infrarot-Flächenstrahler(1) mit Reflektorgehäuse ist auf die im Sockel mit Einbaurahmen (6) gehalterte infrarotdurchlässige Scheibe (2) gerichtet und ist mit einer Reflektorklappe (3) mit Schwenkmechanismus versehen. Die Strahlungsrichtung wird durch Pfeile symbolisiert. Über das Kühlgebläse (4) wird die dem Strahler (1) zugewandte Oberfläche der Scheibe (2) gekühlt. Mit Hilfe einer Düse für Intervallluftstrahlspülung (5), die auf die in den Innenraum des Trockners weisende Seite der Scheibe (2) gerichtet ist, kann die Scheibe (2) von Verunreinigungen freigehalten werden. (7) stellt den Anschluß für Stromversorgung und Steuerung des Strahlers (1) dar.

Figur III zeigt eine Prinzipskizze der Spülluftaufbereitung:
An die Druckluftzuleitung (20) mit Druckminderer (21) schließt sich über Verbindungsleitungen (22) ein Durchflußmesser (23) mit Regelventil und eine Heizvorrichtung (24) an. (25) stellt die mit der Spülluftzuführung (16) verbundene wärmeisolierte Zuleitung (25) dar, in die ein Lufttemperaturfühler (26) integriert ist.

### Beispiel 2

Anhand der Herstellung eines Placebo-Granulates soll der Trocknungsvorgang erläutert werden. Das Granulat hat - bezogen auf die Trockenmasse - folgende Zusammensetzung:

| | |
|---|---|
| Lactose-Monohydrat | 60,0 % |
| getrocknete Maisstärke | 32,0 % |
| hochdisperses Siliciumdioxid | 3,2 % |
| lösliche Maisstärke | 4,5 % |
| Magnesiumstearat | 0,3 % |
| gereinigtes Wasser | 25,5 % (flüchtiger Bestandteil) |

Die Granulierflüssigkeit besteht aus dem Wasser und der löslichen Maisstärke. Das Magnesiumstearat wird erst unmittelbar vor dem Verpressen des getrockneten Granulates zugemischt.

Nach Abschluß des Misch- und Granuliervorgangs liegt das Gut in Form einzelner Granulatpartikel und lockerer Zusammenballungen von Granulatpartikeln vor. Letztere zerfallen während des Trocknungsprozesses in der Regel bereits während der ersten 15 bis 20 Minuten. Dies ist vor allem durch die ständige Selbstdurchmischung des Trocknungsgutes aufgrund der Schwenkbewegung um die Schwenkachse (17) des Behälters bedingt. Pro Minute werden maximal 2 komplette Schwenkzyklen durchlaufen. Bezogen auf die vertikale Ausgangsposition des Behälters ist ein Schwenkbereich bis maximal 90° nach beiden Seiten möglich und sinnvoll. Die Selbstdurchmischung durch das Schwenken hat mehrere Vorteile. Neben einer gründlichen und schonenden Durchmischung wird bei der durch das Schwenken bedingten Verteilung des Trocknungsgutes auf eine größere Wärmeaustauschfläche der Behälterinnenwand der Wärmeaustausch verbessert. Außerdem kann durch die auf maximal 10 U/min verringerte Drehzahl und Intervallbetrieb des Mischarms der Abrieb der Granulatpartikel stark verringert und die Zerstörung des Granulates vermieden werden. Gleichzeitig mit dem Schwenkvorgang wird die Trocknung gestartet. Dabei werden sämtliche Trocknungskomponenten gleichzeitig aktiviert.

Die Behältermanteltemperatur wird über die Temperatur des Heizmediums gesteuert und liegt bei 60°C.

Die Höhe des angelegten Vakuums ist einerseits vom Saugvermögen der Vakuumpumpe und andererseits von der Spülluftdurchflußrate abhängig. Bei einem Durchfluß von 15900 l/h herrscht im Behälterinneren (Innenraum-Volumen 50 l) ein Druck von 160 mbar. Die Temperatur des Spülgases liegt bei 230°C.

Die Arbeitstemperatur des Infrarotstrahlers wird mit Hilfe einer Thermoelementsteuerung auf die gewünschte Scheitelwellenlänge der emittierten Strahlung eingestellt und liegt bei 690°C, entsprechend 3 µm. Dies entspricht einer Leistungsaufnahme des Strahlers von 0,8 kW.

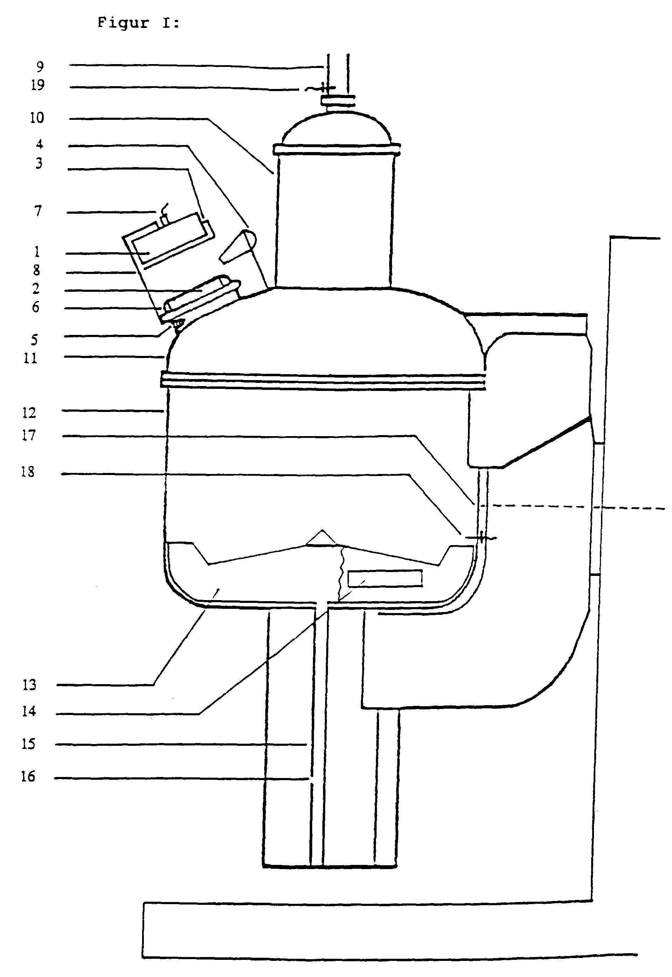

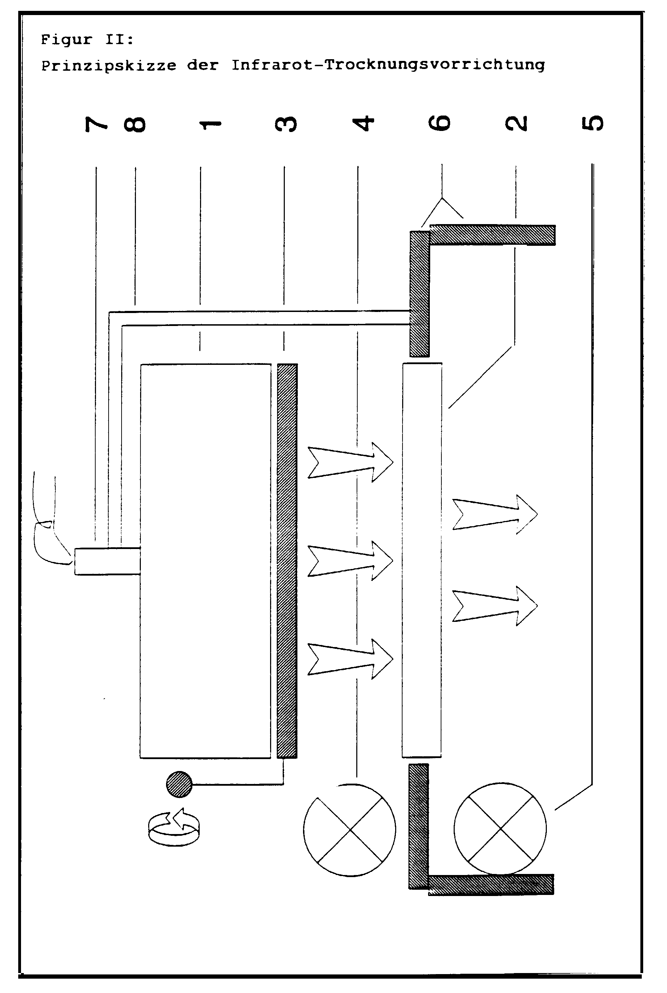

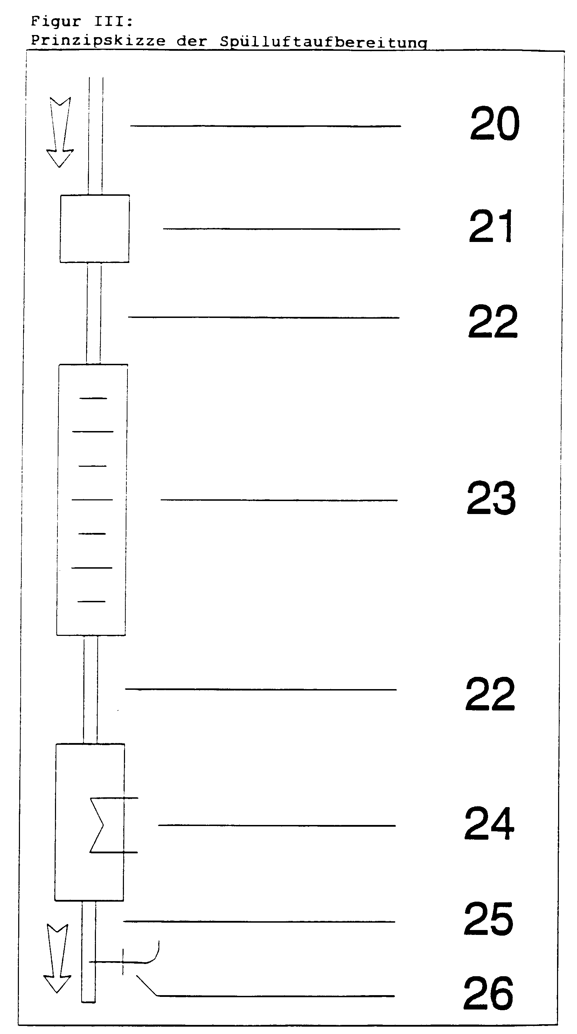

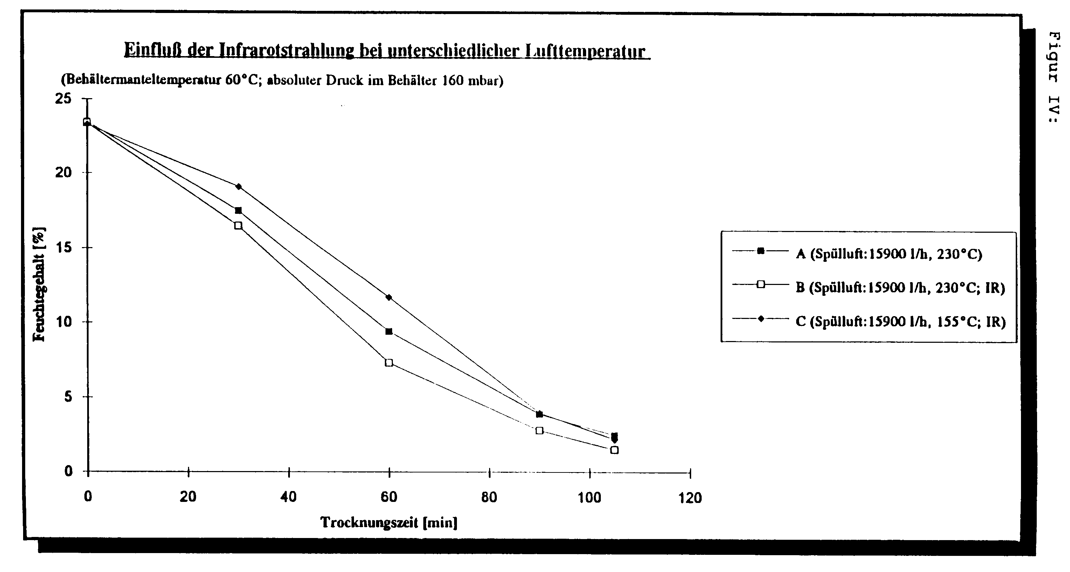

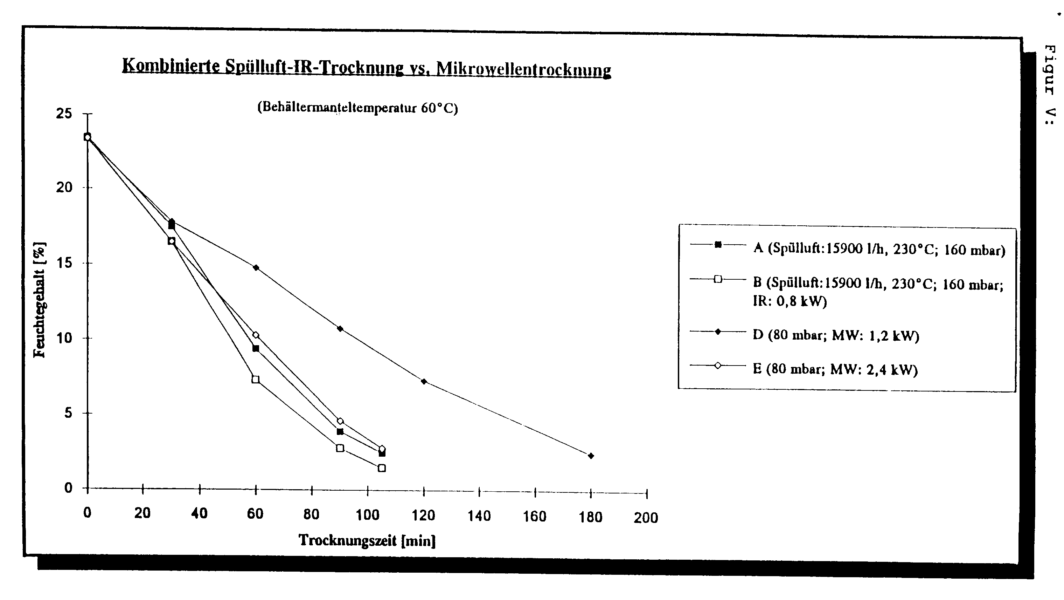

Aus Figur 4 ist beim Vergleich der Kurven A und B ersichtlich, daß bei sonst gleichen Trocknungsbedingungen eine Placeborezeptur mit Hilfe von Infrarotstrahlung schneller getrocknet werden kann. Das Feuchteniveau in Kurve B, die einer erfindungsgemäßen Trocknung entspricht, liegt während des gesamten Trocknungsprozesses niedriger als bei der Referenzkurve A ohne Infrarot-Trocknungskomponente.

Überraschend ist die Wirkung der Infrarotstrahlung im letzten Trocknungsabschnitt nach ungefähr 90 Minuten Trocknungsdauer. Wie aus der Figur 4 hervorgeht, ist es bei Versuch C mit Hilfe der erfindungsgemäßen Infrarot-Trocknungskomponente möglich, trotz einer wesentlich geringeren Spüllufttemperatur von 155°C eine geringere Endfeuchte im Gut zu erreichen als beim Referenzversuch A mit einer Spüllufttemperatur von 230°C, jedoch ohne Infrarot-Trocknungskomponente. Die Trocknungsleistung der Infrarotstrahlung ist im letzten Trocknungsabschnitt durch ihre relativ hohe Eindringtiefe in die Gutspartikel bedingt, während die Spülluft in diesem Abschnitt an weitgehend trockenen Partikeloberflächen vorbeistreicht und nur noch wenig zur Trocknung beitragen kann. Mit der erfindungsgemäßen Kombination aus Kontakt-, Vakuum-, Spülluft- und Infrarottrocknung sind bei dieser Rezeptur Restfeuchtewerte unter 2,0% erreichbar.

Ein Vergleich der erfindungsgemäßen Trocknungsmethode (Kurve B) mit einer Kombination aus Kontakt-, Vakuum- und Mikrowellentrocknung (Kurven D und E) sowie Kontakt-, Vakuum- und Spüllufttrocknung (Kurve A), dargestellt in Figur V, weist für die Spülluftverfahren (Kurven A und B) deutlich kürzere Trocknungszeiten auf. Selbst bei gebenüber Kurve B (eingestrahlte Infrarot-Leistung: 0,8 KW) halbierten Druck von 80 mbar ist erst bei einer höheren eingebrachten Mikrowellenleistung von 2,4 kW in Kurve E ein mit Kurve B annähernd vergleichbarer Trocknungsverlauf zu erzielen. Die Trocknung im Fall der unter Kurve D gewählten niederen Mikrowellenleistung von 1,2 kW führt zu einer deutlich verlängerten Trocknungszeit.

### Legende zu Figur I und Figur II

- 1: Infrarotstrahler mit Reflektorgehäuse
- 2: Infrarotdurchlässige Scheibe
- 3: Reflektorklappe mit Schwenkmechanismus
- 4: Kühlgebläse
- 5: Düse für Intervallluftstrahlspülung
- 6: Sockel mit Einbaurahmen
- 7: Anschluß für Stromversorgung und Steuerung
- 8: Strahlerhalterung
- 9: Vakuumanschluß (Spülluftauslaß)
- 10: Filterdom (beheizbar)
- 11: Behälterdeckel (beheizbar)
- 12: Behälter (beheizbar)
- 13: Mischarmflügel mit Innenhohlraum
- 14: Spüllufteinlaß
- 15: hohlgebohrte Mischarmwelle
- 16: Spülluftzuführung
- 17: Schwenkachse
- 18: Gutstemperaturfühler
- 19: Ablufttemperaturfühler

### Legende zur Figur III

- 20: Druckluftzuleitung
- 21: Druckminderer
- 22: Verbindungsleitungen
- 23: Durchflußmesser mit Regelventil
- 24: Heizvorrichtung
- 25: wärmeisolierte Zuleitung zur Spülluftzuführung (16)
- 26: Lufttemperaturfühler

## Patentansprüche

1. Trockner, insbesondere Eintopf-Mischer-Granulator-Trockner zum sukzessiven Mischen, Feuchtgranulieren und Trocknen von pharmazeutischen Feststoff-Produkten, bestehend aus
einem verschließbaren, um eine Schwenkachse (17) zur Bildung eines sich in sich bewegenden Trocknungsgutsbettes jeweils bis zu 90° nach links und rechts schwenkbaren Aufnahmebehälter (12) und Behälterdeckel (11) mit für die Kontakttrocknung beheizbaren Kesselwandungen,
einem im Innenraum des Behälters (12) geeignet angeordneten drehbaren Mischarm zur gegebenenfalls zusätzlichen Förderung der Durchmischung des Trocknungsgutes, bestehend aus einer Mischarmwelle (15) mit daran angebrachten Mischarmflügeln (13),
einem an der Unterseite des Aufnahmebehälters (12) in dessen Innenraum führenden Spüllufteinlaß (14) für die Spüllufttrocknung und einem gegenüberliegend an der Oberseite des Behälterdeckels (11) angeordneten, gleichzeitig als Spülluftauslaß dienenden Vakuumanschluß (9), über den der Trockner evakuierbar ist, für die Vakuumtrocknung,
dadurch gekennzeichnet, daß der Trockner zusätzlich eine Infrarottrocknungskomponente aufweist, bestehend aus einer luftdicht in die Wand des Behälterdeckels (11) integrierten, für Infrarotstrahlung ausreichend durchlässigen Scheibe (2) und einem außerhalb des Trockners montierten Infrarotstrahler (1), ausgewählt aus einem elektrisch beheizbaren keramischen Infrarot-Flächenstrahler und einem elektrisch beheizbaren Quarzrohrstrahler (1), der seine Energie durch die Scheibe (2) auf das im Innenraum des Trockners befindliche Trocknungsgut abstrahlt.

2. Trockner gemäß Anspruch 1, dadurch gekennzeichnet, daß in die Kesselwandungen des Aufnahmebehälters (12) und Behälterdeckels (11) Wärmemittelkreisläufe integriert sind.

3. Trockner gemäß Anspruch 1, dadurch gekennzeichnet, daß der Spüllufteinlaß (14) in einer semipermeablen porösen Membran besteht oder in Form von geeigneten porösen Sintermetalleinsätzen vorliegt.

4. Trockner gemäß Anspruch 1, dadurch gekennzeichnet, daß
der Strahler (1) mit Reflektoren aus blankgewalztem Aluminium oder aus Silber oder Gold als Aufdampfung oder entsprechender dünner Schicht auf einem Trägermaterial versehen ist,
zwischen Strahler (1) und Scheibe (2) bei Verwendung eines keramischen Infrarot-Flächenstrahlers eine Reflektorklappe (3) mit Schwenkmechanismus angeordnet ist,
die Oberfläche der Scheibe (2) mit Hilfe eines von einem Kühlgebläse (4) oder Saugventilator erzeugten Luftstromes gekühlt wird und
die dem Trocknungsgut zugewandte Oberfläche der Scheibe (2) mit einer geeigneten Intervallluftstrahlspülung (5) von Verunreinigungen freigehalten wird.

5. Trockner gemäß Anspruch 1, dadurch gekennzeichnet, daß die Scheibe (2) eine Transmission von mehr als 60 % bei der unter den Betriebsbedingungen eingestrahlten Scheitelwellenlänge der Infrarotstrahlung besitzt.

6. Verfahren zum sukzessiven Mischen, Feuchtgranulieren und Trocknen von pharmazeutischen Feststoff-Produkten, bei dem die erforderlichen Mischvorgänge, die Feuchtgranulierung und der sich anschließende Trocknungsvorgang in einem luftdicht verschließbaren Trockner gemäß Anspruch 1 durchgeführt werden und zur Trocknung gleichzeitig eine Kombination aus Kontakt-, Vakuum- und Spüllufttrocknung zum Einsatz kommt, dadurch gekennzeichnet, daß zusätzlich eine Infrarottrocknung durchgeführt wird, indem mit Hilfe des außerhalb des Trockners montierten Infrarotstrahlers (1) durch die in die Wand des Trockners integrierte Scheibe (2) Infrarotstrahlung mit einer auf das Absorptionsverhalten des herauszutrocknenden Lösungsmittels abgestimmten Scheitelwellenlänge auf das im Innenraum des Behälters (12) befindliche Trocknungsgut abgestrahlt wird und die Scheibe (2) eine Transmission von mehr als 60 % bei der eingestrahlten Scheitelwellenlänge aufweist.

7. Verfahren gemäß Anspruch 6, dadurch gekennzeichnet, daß die Scheibe (2) eine Transmission von mehr als 80 % bei der eingestrahlten Scheitelwellenlänge besitzt.

8. Verfahren gemäß Anspruch 6, dadurch gekennzeichnet, daß zum Heraustrocknen von Wasser Infrarotstrahlung mit einer Scheitelwellenlänge im Bereich von 1,2 bis 6 µm verwendet wird.

9. Verfahren gemäß Anspruch 6, dadurch gekennzeichnet, daß
a) die Kontakttrocknung durch Wärmeeintrag über in die Kesselwandungen des Behälters (12) und/oder des Behälterdeckels (11) integrierte Wärmemittelkreisläufe erfolgt, wobei das Wärmemittel eine Temperatur zwischen 50 und 80°C besitzt,
b) die Vakuumtrocknung durch Erniedrigung des Siedepunktes des herauszutrocknenden Lösungsmittels mit Hilfe von Unterdruck erfolgt, wobei über einen am Behälterdeckel (11) angebrachten Vakuumanschluß (9) im Innenraum des geschlossenen Behälters (12) ein konstanter Druck zwischen 10 und 200 mbar hergestellt wird, und
c) die Spüllufttrocknung durch Hindurchleiten eines definierten Stromes trockener, gereinigter und erhitzter Luft durch das gesamte Trocknungsgut erfolgt, wobei die Spülluft mit Hilfe des im Innenraum des geschlossenen Behälters (12) herrschenden Unterdruckes über einen an der Unterseite des Behälters (12) angeordneten Spüllufteinlaß (14) mit geeigneter Spülluftversorgung bei einer Durchflußrate von 10000 bis 50000 l/h in das Trocknungsgutbett eingeleitet wird und durch den Vakuumanschluß (9) aus dem Behälter (12) austritt.

10. Verfahren gemäß Anspruch 6, dadurch gekennzeichnet, daß der Behälter (12) zur Bildung eines in sich bewegenden Trocknungsgutsbettes um die Schwenkachse (17) langsam abwechselnd nach links und rechts geschwenkt wird, wobei die Durchmischung des Trocknungsgutes auch durch den im Innenraum des Behälters (12) in Intervallen langsam rotierenden Mischarm zusätzlich gefördert wird.

## Claims

1. Dryer, particularly a one-pot mixer/granulator/ dryer for successively mixing, moist granulating and drying solid pharmaceutical products, consisting of a closeable receiving container (12) with heatable vessel walls for contact drying and a container lid (11), the container being pivotable up to 90° to the left and right about a pivot axis (17) to form a moving bed of material to be dried, a rotatable mixing arm suitably mounted inside the container (12) for optionally further aiding the mixing of the material, consisting of a mixing arm shaft (15) with mixing arm vanes (13) mounted thereon, a flushing air inlet (14) for flushing air drying which leads into the interior of the receiving container (12) on the underside thereof, and a vacuum connection (9), through which the dryer can be evacuated for vacuum drying,which simultaneously serves as an outlet for the flushing air, and which is arranged opposite on the upper side of the container lid (11), characterised in that the dryer additionally has an infrared drying component consisting of a window (2) integrated in airtight manner in the wall of the container lid (11) which is sufficiently permeable to infrared radiation, and an infrared radiator (2) mounted outside the dryer selected from an electrically heated ceramic infrared panel radiator and an electrically heated quartz tube radiator (1), which irradiates its energy onto the material for drying contained inside the dryer through the window (2).

2. Dryer according to claim 1, characterised in that heating circuits are integrated in the vessel walls of the receiving container (12) and container lid (11).

3. Dryer according to claim 1, characterised in that the flushing air inlet (14) consists of a semi-permeable porous membrane or is present in the form of suitable porous sintered metal inserts.

4. Dryer according to claim 1, characterised in that
the radiator (1) is provided with reflectors of smooth-rolled aluminium or silver or gold applied by vaporising or provided in a correspondingly thin layer to a carrier material,
between the radiator (1) and window (2), if a ceramic infrared panel radiator is used, a reflector shutter (3) with pivot mechanism is arranged,
the surface of the window (2) is cooled by means of an air current generated by a cooling fan (4) or suction ventilator and
the surface of the window (2) facing the material to be dried is kept free of impurities by means of a suitable intermittent air jet flushing device (5).

5. Dryer according to claim 1, characterised in that the window (2) has a transmittance of more than 60% at the wavelength peak of the infrared radiation irradiated under the operating conditions.

6. Process for successively mixing, moist-granulating and drying solid pharmaceutical products, wherein the mixing processes required, the moist-granulation and the subsequent drying operation, are carried out in a dryer which can be sealed in air tight manner according to claim 1, and drying is carried out using simultaneously a combination of contact, vacuum and flushing air drying, characterised in that additionally infrared drying is carried out, wherein with the aid of the infrared radiator (1) mounted outside the dryer, infrared radiation having a wavelength peak adapted to the adsorption characteristics of the solvent to be dried is irradiated onto the material for drying located inside the container (12), through the window (2) integrated in the wall of the dryer, and the window (2) has a transmittance of more than 60% at the wavelength peak used for irradiation.

7. Process according to claim 6, characterised in that the window (2) has a transmittance of more than 80% at the wavelength peak used for irradiation.

8. Process according to claim 6, characterised in that infrared radiation having a wavelength peak in the range from 1.2 to 6 µm is used to dry out water.

9. Process according to claim 6, characterised in that
a) the contact drying is effected by the introduction of heat through heating circuits integrated in the walls of the container (12) and/or the container lid (11), the heating medium having a temperature between 50 and 80°C,
b) the vacuum drying is effected by lowering the boiling point of the solvent which is to be dried off using underpressure, a constant pressure of between 10 and 200 mbar being established inside the closed container (12) through a vacuum connector (9) mounted on the container lid (11), and
c) the flushing air drying being carried out by passing a defined current of dry, cleansed and heated air throughout the material to be dried, the flushing air being introduced into the bed of material for drying by means of the underpressure prevailing inside the closed container (12), through a flushing air inlet (14) mounted on the underside of the container (12) with a suitable supply of flushing air at a flow rate of 10000 to 50000 l/h, this flushing air leaving the container (12) through the vacuum connector (9).

10. Process according to claim 6, characterised in that the container (12) is slowly pivoted to the left and right alternately about a pivot axis (17) in order to form an inherently moving bed of material for drying, whilst the mixing of the material for drying can additionally be promoted by means of a mixing arm slowly rotating at intervals inside the container (12).

## Revendications

1. Sécheur, en particulier malaxeur-granulateur-sécheur à un seul réacteur pour le malaxage, la granulation humide et le séchage successifs de produits pharmaceutiques solides, consistant en
un récipient de réception (12) qui peut être fermé, qui peut pivoter jusqu'à 90° aussi bien vers la gauche que vers la droite autour d'un axe de pivotement (17) pour la formation d'un lit de matière à sécher qui se déplace en lui-même et un couvercle de récipient (11) avec des parois de récipient chauffables pour le séchage par contact,
un bras malaxeur rotatif disposé de manière appropriée dans la cavité interne du récipient (12) pour favoriser encore éventuellement le mélange de la matière à sécher, consistant en un arbre de bras malaxeur (15) sur lequel sont montées des ailettes de bras malaxeur (13),
une entrée d'air de balayage (14) débouchant au niveau du côté inférieur du récipient de réception (12) dans sa cavité interne pour le séchage à l'air de balayage et un raccordement de vide (9) disposé de manière opposée au niveau du côté supérieur du couvercle de récipient (11), servant en même temps de sortie d'air de balayage, par le biais duquel le sécheur peut être mis sous vide, pour le séchage sous vide,
caractérisé en ce que le sécheur comporte en outre un constituant de séchage par rayonnement infrarouge consistant en une plaque (2) suffisamment transparente pour le rayonnement infrarouge, intégrée de manière étanche à l'air dans la paroi du couvercle de récipient (11) et en un radiateur à rayonnement infrarouge (1) monté à l'extérieur du sécheur, choisi parmi un radiateur plan céramique à rayonnement infrarouge chauffable électriquement et un radiateur tubulaire en quartz chauffable électriquement (1) qui rayonne son énergie à travers la plaque (2) sur la matière à sécher située dans la cavité interne du sécheur.

2. Sécheur selon la revendication 1 caractérisé en ce que des circuits d'agent caloporteur sont intégrés dans les parois de récipient du récipient de réception (12) et du couvercle de récipient (11).

3. Sécheur selon la revendication 1 caractérisé en ce que l'entrée d'air de balayage (14) consiste en une membrane poreuse semi-perméable ou est sous forme d'éléments d'insertion en métal fritté poreux appropriés.

4. Sécheur selon la revendication 1 caractérisé en ce que
le radiateur (1) est muni de réflecteurs en aluminium laminé à froid ou en argent ou en or sous forme de métallisation sous vide ou de couche mince correspondante sur un matériau support,
un volet réflecteur (3) à mécanisme de pivotement est disposé entre le radiateur (1) et la plaque (2) dans le cas de l'emploi d'un radiateur plan céramique à rayonnement infrarouge,
la surface de la plaque (2) est refroidie au moyen d'un courant d'air produit par une soufflante de refroidissement (4) ou par un ventilateur aspirant et
la surface de la plaque (2) tournée vers la matière à sécher est maintenue exempte d'impuretés au moyen d'un balayage par jet d'air intermittent (5) approprié.

5. Sécheur selon la revendication 1 caractérisé en ce que la plaque (2) possède une transmission de plus de 60% dans le cas de la longueur d'onde de crête du rayonnement infrarouge rayonnée dans les conditions de fonctionnement.

6. Procédé de malaxage, granulation humide et séchage successifs de produits pharmaceutiques solides dans lequel les processus de malaxage nécessaires, la granulation humide et le processus de séchage subséquent sont mis en oeuvre dans un sécheur qui peut être fermé de manière étanche à l'air selon la revendication 1 et une combinaison de séchage par contact, sous vide et par air de balayage est utilisée simultanément pour le séchage, caractérisé en ce qu'un séchage par rayonnement infrarouge est mis en oeuvre en plus par le fait qu'à l'aide du radiateur à rayonnement infrarouge (1) monté à l'extérieur du sécheur un rayonnement infrarouge ayant une longueur d'onde de crête adaptée au comportement d'absorption du solvant qui doit être éliminé par séchage est rayonné sur la manière à sécher située dans la cavité interne du récipient (12) à travers la plaque (2) intégrée dans la paroi du sécheur et la plaque (2) présente une transmission de plus de 60% dans le cas de la longueur d'onde de crête rayonnée.

7. Procédé selon la revendication 6 caractérisé en ce que la plaque (2) possède une transmission de plus de 80% dans le cas de la longueur d'onde de crête rayonnée.

8. Procédé selon la revendication 6 caractérisé en ce que, pour éliminer l'eau par séchage, on utilise un rayonnement infrarouge ayant une longueur d'onde de crête située dans le domaine de 1,2 à 6 µm.

9. Procédé selon la revendication 6 caractérisé en ce que
a) le séchage par contact a lieu par introduction de chaleur par l'intermédiaire de circuits d'agent caloporteur intégrés dans les parois de récipient du récipient (12) et/ou du couvercle de récipient (11), l'agent caloporteur possédant une température comprise entre 50 et 80°C,
b) le séchage sous vide a lieu par abaissement du point d'ébullition du solvant qui doit être éliminé par séchage à l'aide d'une pression négative, une pression constante située entre 10 et 200 mbar étant établie dans la cavité interne du récipient (12) fermé par l'intermédiaire d'un raccordement de vide (9) monté sur le couvercle de récipient (11), et
c) le séchage à l'air de balayage a lieu par passage d'un courant défini d'air sec, épuré et chauffé à travers la totalité de la matière à sécher, l'air de balayage étant introduit à l'aide de la pression négative régnant dans la cavité interne du récipient (12) fermé par l'intermédiaire d'une entrée d'air de balayage (14) disposée au niveau du côté inférieur du récipient (12) avec un apport d'air de balayage approprié pour un débit de passage de 10000 à 50000 l/h dans le lit de matière à sécher et sortant du récipient (12) par le raccordement de vide (9).

10. Procédé selon la revendication 6 caractérisé en ce que le récipient (12) est amené à pivoter lentement tour à tour vers la gauche et vers la droite autour de l'axe de pivotement (17) pour la formation d'un lit de matière à sécher qui se déplace en lui-même, le mélange de la matière à sécher étant aussi favorisé en outre par le bras malaxeur qui tourne lentement par intermittence dans la cavité interne du récipient (12).
